# DEMANDE DE BREVET EUROPEEN

(11) **EP 1 591 001 A1**
(43) Date de publication de la demande: **02.11.2005**
(21) Numéro de dépôt: 05290934.8
(22) Date de dépôt: 28.04.2005
(51) Int. Cl.: A01D 33/08, A01D 33/10

(54) **Machine pour récolter les produits en terre**

(30) Priorité: 30.04.2004 FR 0404657
(71) Demandeur: ETABLISSEMENTS JEAN MOREAU, 59159 Marcoing (FR)
(72) Inventeur: Jette, Etienne, 59159 Marcoing (FR)
(74) Mandataire: Gaillarde, Frédéric F. Ch.

(57) **Abrégé**

Cette machine pour récolter les produits en terre comprend :
- des moyens (7) pour extraire lesdits produits de la terre,
- des moyens (19) pour stocker provisoirement lesdits produits,
- des moyens (17a à 17c) pour convoyer/nettoyer lesdits produits, disposés entre lesdits moyens d'extraction (7) et lesdits moyens de stockage provisoire (19),
- des moyens de déterrage disposés à l'intérieur desdits moyens de stockage provisoire (19), ces moyens de déterrage comprenant au moins une table (30) à rouleaux (31).

## Description

La présente invention se rapporte à une machine pour récolter les produits en terre, telle qu'une arracheuse de betteraves.

Comme cela est connu en soi, une telle machine comprend typiquement :
- des moyens pour extraire lesdits produits de la terre,
- des moyens pour stocker provisoirement lesdits produits, et
- des moyens pour convoyer/nettoyer lesdits produits, disposés entre lesdits moyens d'extraction et lesdits moyens de stockage provisoire.

Classiquement, les moyens de convoyage/nettoyage comprennent une pluralité de grilles rotatives appelées habituellement « turbines », disposées les unes à la suite des autres entre lesdits moyens d'extraction et lesdits moyens de stockage.

Classiquement également, les moyens de stockage provisoire comprennent une trémie au fond de laquelle se déplacent un ou plusieurs tapis convoyeurs à barreaux, comme cela est enseigné par exemple par le document DE 39 17 604.

Il est apparu que ces machines de la technique antérieure ne permettaient pas de nettoyer suffisamment la terre collée aux produits extraits du sol, notamment lorsque que la campagne de récolte avait lieu dans des conditions climatiques défavorables (temps de pluie, forte hygrométrie).

Pour remédier à cet inconvénient, on a essayé de placer des rouleaux de déterrage dans la continuité des moyens de convoyage/nettoyage, en amont des moyens de stockage provisoire (trémie), comme cela est enseigné par exemple par le document EP 1 310 148 ou par le document FR 1 142 090.

Même si ces rouleaux de déterrage ont effectivement apporté une certaine amélioration, le résultat global demeurait assez médiocre : une quantité encore importante de terre demeurait collée aux produits extraits du sol, notamment lorsque la terre était humide.

La présente invention a ainsi pour but d'apporter une amélioration sensible à cet état de la technique, étant entendu qu'une préoccupation majeure dans le domaine de la récolte des produits en terre est d'obtenir des produits véhiculant le moins de terre possible.

On atteint ce but de l'invention avec une machine pour récolter les produits en terre, comprenant :
- des moyens pour extraire lesdits produits de la terre,
- des moyens pour stocker provisoirement lesdits produits,
- des moyens pour convoyer/nettoyer lesdits produits, disposés entre lesdits moyens d'extraction et lesdits moyens de stockage provisoire,
- des moyens de déterrage disposés à l'intérieur desdits moyens de stockage provisoire, ces moyens de déterrage comprenant au moins une table à rouleaux.

Il existait, avant la présente invention, un préjugé qu'une table à rouleaux ne pouvait assurer correctement sa fonction de déterrage qu'à la condition que les produits extraits du sol passent rapidement et sans s'empiler sur cette table, en flux continu, comme cela est enseigné par exemple par les documents EP 1 310 148 et FR 1 142 090.

Or, de manière surprenante, on s'est rendu compte qu'en plaçant la table à rouleaux à l'intérieur des moyens de stockage provisoire (trémie), c'est-à-dire dans un lieu où les produits extraits du sol séjournent en s'empilant les uns sur les autres, on obtenait un déterrage nettement plus efficace qu'auparavant.

Une explication de cet effet surprenant serait sans doute que par l'effet de leur empilement, les produits extraits du sol qui sont situés au contact des rouleaux sont mus par ces rouleaux de manière à la fois plus énergique et plus longue que dans les machines de l'état de la technique.

On notera en outre que le mouvement communiqué par les rouleaux aux produits extraits du sol est nettement plus important que celui que l'on obtient avec un simple tapis convoyeur à barreaux tel que celui de la machine divulguée par le document DE 39 17 604.

On remarquera par ailleurs que la machine selon l'invention permet de conserver l'ensemble des moyens de convoyage/nettoyage, étant donné que la table à rouleaux est située dans une autre zone de la machine.

Ceci diffère considérablement des machines de la technique antérieure, dans lesquelles la mise en place d'une table à rouleaux nécessitait la suppression d'au moins une partie des moyens de convoyage/nettoyage, diminuant ainsi l'efficacité de nettoyage de ces moyens.

On notera également que la mise en place d'une table à rouleaux dans les moyens de stockage provisoire est particulièrement aisée, de sorte que la solution proposée par l'invention peut être adaptée de manière très simple aux machines existantes.

Suivant d'autres caractéristiques optionnelles de la machine selon l'invention :
- lesdits moyens de déterrage sont disposés au fond desdits moyens de stockage provisoire,
- lesdits moyens de stockage provisoire comprennent un fond mouvant,
- lesdits moyens de déterrage sont disposés au-dessus dudit fond mouvant,
- lesdits moyens de déterrage présentent une inclinaison variable,
- lesdits moyens de déterrage sont escamotables,
- lesdits rouleaux sont répartis sensiblement selon un profil en auge,
- les rouleaux situés d'un côté du plan médian de ladite table tournent en sens contraire de ceux situés de l'autre côté dudit plan médian, ces sens étant tels que ces rouleaux ont pour effet de ramener vers ledit plan médian les produits tombant dans lesdits moyens de stockage provisoire,
- deux quelconques rouleaux adjacents de ladite table tournent en sens contraires l'un par rapport à l'autre,
- chacun desdits rouleaux comprend à sa surface au moins un jonc hélicoïdal, les sens d'enroulement de ces joncs étant adaptés pour pousser les produits tombant dans lesdits moyens de stockage provisoire vers la sortie de ces moyens de stockage, sous l'effet de la rotation desdits rouleaux.

D'autres caractéristiques et avantages de la présente invention apparaîtront à la lumière de la description qui va suivre et des dessins annexés, dans lesquels :
- la figure 1 est une vue en perspective d'une machine selon l'invention,
- la figure 2 est une vue de dessus (selon la flèche Il de la figure 1) des moyens de stockage provisoire de cette machine,
- la figure 3 est une vue de derrière (flèche III de la figure 1) de cette machine,
- la figure 4 est une vue de côté (flèche IV de la figure 1) de cette machine, et
- la figure 5 est une vue analogue à la figure 4 d'une variante de cette machine.

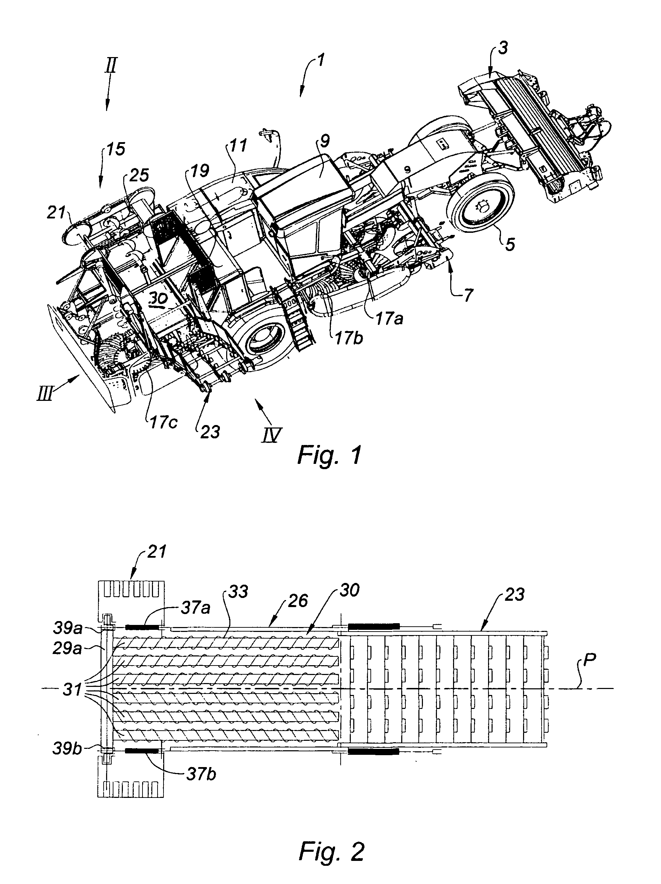

On se reporte à présent à la figure 1, sur laquelle on a représenté, à titre d'exemple, une machine 1 à arracher les betteraves.

Comme cela est connu en soi, une telle machine comprend, de l'avant vers l'arrière, une effeuilleuse de betteraves 3, des roues motrices et directrices 5, un groupe arracheur 7, une cabine de conduite 9, un moteur 11, ainsi que des moyens de stockage provisoire 15.

Une pluralité de grilles tournantes ou « turbines » 17a à 17c sont disposées à la suite les unes des autres sous le châssis de la machine 1, s'étendant ainsi entre le groupe arracheur 7 et les moyens de stockage provisoire 15.

Ces moyens de stockage provisoire comprennent une trémie de stockage 19.

Un premier tapis convoyeur 21 circule en boucle entre la dernière turbine 17c et la partie supérieure de la trémie 19.

Un deuxième tapis convoyeur 23 s'étend à partir de la trémie 19 vers l'extérieur de la machine 1.

Une vis d'Archimède 25 ou vis sans fin s'étend entre la partie supérieure du premier tapis convoyeur 21 et une zone sensiblement médiane de la partie supérieure de la trémie 19.

En se reportant à présent aux figures 2 à 4, on peut voir que la trémie 19 comprend un fond mouvant 26, c'est-à-dire en fait une pluralité de barreaux 27 fixés sur deux chaînes ou courroies parallèles 28a, 28b tendues sur deux pignons ou cylindres rotatifs 29a, 29b, un plateau P étant disposé entre ces deux pignons et entre les brins supérieur et inférieur des chaînes ou courroies 28a, 28b.

Dans le fond de la trémie 19 est également disposée une table à rouleaux 30, comprenant une pluralité de rouleaux de déterrage 31.

Dans l'exemple représenté, il y a six rouleaux, mais ce nombre n'est nullement limitatif.

Chaque rouleau 31 peut être formé par un tube par exemple en acier éventuellement inoxydable, fermé à ses deux extrémités.

Au moins un jonc 33 s'enroule de manière hélicoïdale autour de chaque rouleau 31.

Ce jonc peut être lui aussi formé en acier éventuellement inoxydable, et soudé sur son rouleau associé.

Il faut comprendre que les rouleaux 31 sont sensiblement parallèles à la direction d'avancement du fond mouvant 26 ou, en d'autres termes, que ces rouleaux sont disposés de manière sensiblement transversale à la direction d'avancement de la machine 1.

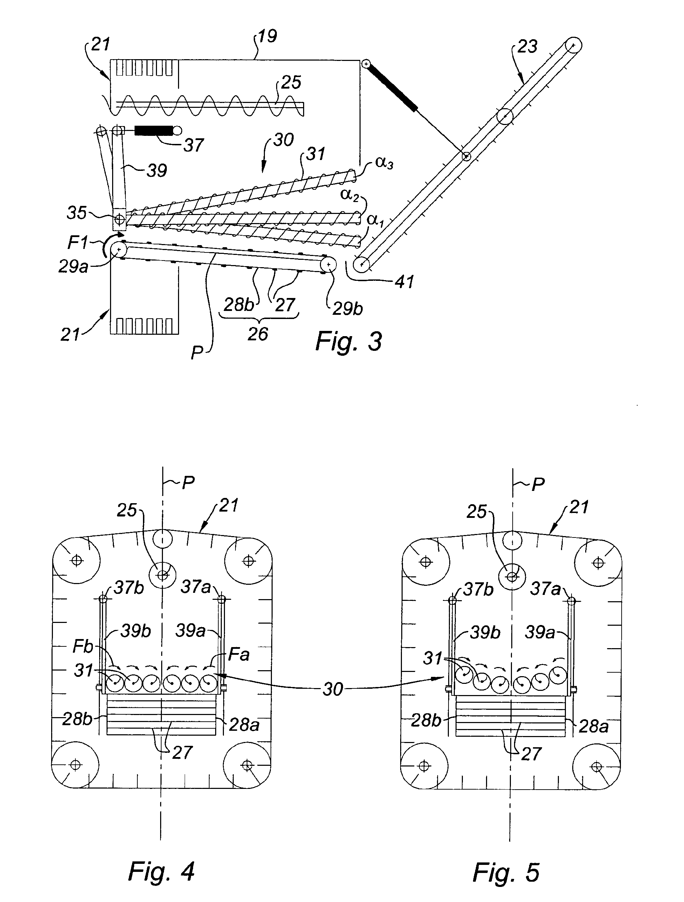

Ces rouleaux sont mis en rotation par des moyens connus en soi par exemple dans des sens indiqués par les flèches Fa et Fb figurant sur les figures 4 et 5 : les trois rouleaux situés d'un côté du plan médian P de la trémie 19 tournent en sens contraire de ceux situés de l'autre côté de ce plan, ces sens étant tels que les rouleaux 31 ont pour effet de ramener vers le plan P les betteraves tombant dans la trémie 19.

En outre, comme cela est visible sur la figure 2, les joncs 33 des trois rouleaux situés d'un côté du plan P s'enroulent en sens inverse de ceux des trois rouleaux situés de l'autre côté de ce plan, ces sens d'enroulement étant adaptés pour que les joncs 33 poussent les betteraves vers le deuxième tapis convoyeur 23 sous l'effet de la rotation des rouleaux 31 dans les sens qui viennent d'être indiqués.

Selon une autre variante possible et non représentée, on pourrait également envisager que deux quelconques rouleaux adjacents de la table à rouleaux tournent en sens contraires l'un par rapport à l'autre.

De manière optionnelle, comme cela est visible sur la figure 3, la table à rouleaux 30 peut pivoter par rapport à un point d'articulation 35 disposé à l'opposé du deuxième tapis convoyeur 23.

Ce mouvement de pivotement est imposé par un ou plusieurs vérins 37a, 37b agissant sur un ou plusieurs bras 39a, 39b solidaires de la table à rouleaux 30.

Sur la figure 2, on a représenté trois inclinaisons possibles de la table à rouleaux 30, correspondant à trois longueurs différentes des vérins 37.

On notera également, comme cela est visible sur la figure 3, qu'il existe un espace 41 entre le fond mouvant 26 et le deuxième tapis convoyeur 23.

Dans le mode de réalisation de la figure 4, les six rouleaux 31 sont disposés de manière coplanaire.

Dans le mode de réalisation de la figure 5, les six rouleaux 31 sont répartis sensiblement selon un profil en auge.

Le mode de fonctionnement et les avantages de la machine qui vient d'être décrite résultent directement de la description qui précède.

Lorsque les betteraves passent sous l'effeuilleuse 3, leurs feuilles sont coupées.

Le groupe arracheur 7 permet ensuite d'extraire ces betteraves du sol et de les amener sur la première turbine 17a.

Sous l'effet de la rotation des cette turbine et des suivantes, une partie importante de la terre extraite avec les betteraves est éliminée.

Les betteraves sont ainsi nettoyées et convoyées jusqu'à la dernière turbine 17c.

A cet endroit, le premier tapis convoyeur 21 récupère les betteraves et les amène jusque dans la partie supérieure de la trémie 19.

Une partie de ces betteraves tombe alors directement dans cette trémie, une autre partie étant entraînée par la vis d'Archimède 25.

Cette vis d'Archimède permet d'assurer une répartition optimale des betteraves à l'intérieur de la trémie.

Les betteraves tombent alors sur la table à rouleaux 30.

Sous l'effet de la rotation des rouleaux 31 et des joncs associés 33, ces betteraves sont agitées vigoureusement et conduites progressivement en direction du deuxième tapis convoyeur 23.

Cette agitation vigoureuse a pour effet de faire tomber la terre qui était restée collée sur ces betteraves à l'issue du nettoyage effectué par les turbines 17.

Cette terre tombe dans les interstices situés entre les rouleaux 31, et se retrouve ainsi sur le plateau P du fond mouvant 26.

Sous l'effet du déplacement de ce tapis dans le sens F1 visible sur la figure 3, la terre tombée sur le plateau P est déplacée par les barreaux 27 jusqu'à l'espace 41, et tombe ainsi au sol.

Les betteraves qui arrivent au bout des rouleaux 31 sont ensuite acheminées sur le deuxième tapis convoyeur 23 permettant de charger un engin (non représenté) telle qu'une benne remorquée.

Selon la quantité de terre qui se trouve sur les betteraves à leur entrée dans la trémie 19, on règle l'inclinaison de la table à rouleaux 30.

Dans la configuration α1, les rouleaux 31 descendent depuis le point d'articulation 35 jusqu'au deuxième tapis convoyeur 23.

Cette première configuration a pour effet d'assurer un passage rapide des betteraves sur les rouleaux 31, et correspond à une situation où les betteraves comportent une faible quantité de terre à leur entrée dans la trémie 19.

Dans la configuration α2, les rouleaux 31 sont disposés de manière sensiblement horizontale.

Cette deuxième configuration correspond à une situation où les betteraves comportent une quantité moyenne de terre à leur entrée dans la trémie 19.

Dans la configuration α3, les rouleaux 31 montent à partir du point d'articulation 35.

Cette troisième configuration correspond à une situation où les betteraves qui entrent dans la trémie 19 comportent une quantité importante de terre.

Dans cette dernière configuration en effet, sous l'effet de leur poids, les betteraves mettent plus de temps à rejoindre l'extrémité libre des rouleaux 31 sous l'effet de la rotation des joncs 33.

Du fait de cette durée de séjour supérieure sur les rouleaux 31, les betteraves sont davantage secouées, ce qui permet d'arriver à bout de toute la terre collée à leur surface.

On notera que dans les configurations α2 et α3, les betteraves tombent en cascade sur le deuxième tapis convoyeur 23, et que cette chute favorise l'enlèvement de la terre, laquelle s'échappe par l'espace 41.

Dans la variante représentée à la figure 5, la répartition en auge des rouleaux 31 contribue à ramener les betteraves situées de part et d'autre du plan médian P en direction de ce plan, et à augmenter ainsi les chocs entre ces betteraves, ces chocs étant propices à l'enlèvement de la terre située à la surface de ces betteraves.

On notera que dans l'hypothèse où l'état de propreté des betteraves sortant de la dernière turbine 17c ne justifierait pas de l'utilisation de la table à rouleaux 30, on peut envisager d'enlever cette table du fond de la trémie 19.

On pourra ainsi prévoir que cette table à rouleaux soit montée sur un châssis pouvant aisément être encastré dans ou extrait de la zone du fond de la trémie 19.

Comme on peut le comprendre à la lumière de ce qui précède, les rouleaux 31 permettent de déterrer les betteraves dans une zone (la trémie 19) où ces betteraves séjournent un certain temps, notamment lorsque le débit du deuxième tapis convoyeur 23 est inférieur au débit du premier tapis convoyeur 21.

On notera en outre que de par leur emplacement à l'intérieur de la trémie 19, les rouleaux de déterrage 31 ne nécessitent pas la suppression d'une ou plusieurs turbines 17, de sorte que l'effet de déterrage de ces rouleaux vient s'ajouter à l'efficacité du nettoyage produit par l'ensemble des turbines 17.

On notera également que la mise en place de la table à rouleaux 30 à l'intérieur de la trémie 19 est particulièrement simple, et qu'elle peut être effectuée sur toute machine du parc existant.

Bien entendu, la présente invention n'est pas limitée au mode de réalisation décrit et représenté fourni à titre d'exemple illustratif et non limitatif.

C'est ainsi par exemple que l'on pourrait envisager d'utiliser plusieurs tables à rouleaux à l'intérieur de la trémie 19, disposées selon différentes configuration possibles : à la suite les unes des autres au fond de la trémie 19, par exemple.

## Revendications

1. Machine (1) pour récolter les produits en terre, comprenant :
- des moyens (7) pour extraire lesdits produits de la terre,
- des moyens (19) pour stocker provisoirement lesdits produits,
- des moyens (17a à 17c) pour convoyer/nettoyer lesdits produits, disposés entre lesdits moyens d'extraction (7) et lesdits moyens de stockage provisoire (19),
- des moyens de déterrage disposés à l'intérieur desdits moyens de stockage provisoire (19), ces moyens de déterrage comprenant au moins une table (30) à rouleaux (31).

2. Machine (1) selon la revendication 1, dans laquelle lesdits moyens de déterrage (30) sont disposés au fond desdits moyens de stockage provisoire (19).

3. Machine (1) selon l'une des revendications 1 ou 2, dans laquelle lesdits moyens de stockage provisoire (19) comprennent un fond mouvant (26).

4. Machine (1) selon les revendications 2 et 3, dans laquelle lesdits moyens de déterrage (30) sont disposés au-dessus dudit fond mouvant (26).

5. Machine (1) selon l'une quelconque des revendications 1 à 4, dans laquelle lesdits moyens de déterrage (30) présentent une inclinaison variable.

6. Machine (1) selon l'une quelconque des revendications précédentes, dans laquelle lesdits moyens de déterrage sont escamotables.

7. Machine (1) selon l'une quelconque des revendications précédentes, dans laquelle lesdits rouleaux (31) sont répartis sensiblement selon un profil en auge.

8. Machine (1) selon l'une quelconque des revendications précédentes, dans laquelle les rouleaux situés d'un côté du médian (P) de ladite table (30) tournent en sens contraire de ceux situés de l'autre côté dudit plan médian (P), ces sens étant tels que ces rouleaux (31) ont pour effet de ramener vers ledit plan médian (P) les produits tombant dans lesdits moyens de stockage provisoire (19).

9. Machine (1) selon l'une quelconque des revendications 1 à 7, dans laquelle deux quelconques rouleaux adjacents de ladite table tournent en sens contraires l'un par rapport à l'autre.

10. Machine (1) selon l'une quelconque des revendications précédentes, dans laquelle chacun desdits rouleaux (31) comprend à sa surface au moins un jonc hélicoïdal (33), les sens d'enroulement de ces joncs étant adaptés pour pousser les produits tombant dans lesdits moyens de stockage provisoire (19) vers la sortie de ces moyens de stockage, sous l'effet de la rotation desdits rouleaux (31).
